# EUROPEAN PATENT APPLICATION

(11) **EP 3 413 173 A1**
(43) Date of publication of application: **12.12.2018**
(21) Application number: 17305699.5
(22) Date of filing: 09.06.2017
(51) Int. Cl.: G06F 3/03, G06T 1/00, G02B 27/01

(54) **AN EYEWEAR ITEM COMPRISING A COMPRESSIVE SENSING MODULE**

(71) Applicant: Essilor International, 94220 Charenton-le-Pont (FR)
(72) Inventor: CANO, Jean-Paul, 94220 CHARENTON LE PONT (FR); BOUCHIER, Aude, 94220 CHARENTON LE PONT (FR)
(74) Representative: Cabinet Plasseraud

(57) **Abstract**

An eyewear item (EI) adapted to be worn by a user over or on at least one eye of said user, the eyewear item including a compressive sensing module (CSM).

The compressive sensing module being configured for:
- acquiring at least one compressed representation of a physical parameter (PP) adapted to allow a reconstruction of said physical parameter (PP), said compressed representation corresponding to a convolution of measurements of said physical parameter, and
- outputting the at least one compressed representation of the physical parameter for retrieval by a processing module (MOD) configured to reconstruct said physical parameter based on the at least one compressed representation acquired by the compressive sensing module.

## Description

The invention relates to the field of eyewear items, such as spectacles, contact lenses and the like.

Nowadays, eyewear items often include devices which include one or more sensors and are designed to acquire measurements of various physical parameters, for instance optical, electrical, mechanical, thermodynamic phenomena or the like. These measurements are acquired in the form of signals which are typically provided by sensing devices comprised in these devices, which are then communicated to distant pieces of equipment and processed for further use at various ends, whereby functionalities are thus added to the eyewear items.

In this context, these devices are highly constrained in terms of size, weight, aesthetics, energy consumption and energy storage due to their needing to be embedded in an eyewear item. These constraints strongly limit the processing power that they may have, as well as the rate with which data may be remotely sent by these devices to distant devices.

The general philosophy which is usually relied on for the design of these devices to address this problem revolves around using highly miniaturized components.

This approach has drawbacks, in that these components are usually very costly. In addition, the satisfaction of all the imposed criteria is still very challenging, whereby the performances of these devices are in the end quite limited.

The invention seeks to improve this situation.

To this end, the invention relates to an eyewear item adapted to be worn by a user over or on at least one eye of said user, the eyewear item including a compressive sensing module, said compressive sensing module being configured for:
- acquiring at least one compressed representation of a physical parameter adapted to allow a reconstruction of said physical parameter, said compressed representation corresponding to a convolution of measurements of said physical parameter,
- outputting the at least one compressed representation of the physical parameter for retrieval by a processing module configured to reconstruct said physical parameter based on the at least one compressed representation acquired by the compressive sensing module.

According to an aspect of the invention, the eyewear item further includes said processing module.

According to an aspect of the invention, the compressive sensing module includes a communication module configured for sending the at least one compressed representation to the processing module.

According to an aspect of the invention, the compressive sensing module includes:
- a mask element configured to convolute measurements of the physical parameter to form a convoluted measurement,
- a detector configured to receive and transform the convoluted measurement into a detected signal forming one of the at least one compressed representation of the physical parameter,
- a digitization element configured to digitize the detected signal for outputting the corresponding compressed representation of the physical parameter.

According to an aspect of the invention, the mask element has a controllable configuration, whereby the mask element is adapted to generate each convoluted measurement as one convoluted measurement among a plurality of possible convoluted measurements.

According to an aspect of the invention, the compressive sensing module is an optical compressive sensing module, the physical parameter being optical in nature.

According to an aspect of the invention, the compressive sensing module comprises an eye tracking mode of operation, wherein the physical parameter is representative at least of a position and/or direction of a gaze of the user and the at least one compressed representation is configured to allow reconstructing said position and/or direction of the gaze of the user.

According to an aspect of the invention, the compressive sensing module includes an ambient light mode of operation, wherein the physical parameter is representative of at least one property of an ambient light surrounding the user and the at least one compressed representation is configured to allow determining said property.

According to an aspect of the invention, said at least one property includes an intensity of said ambient light.

According to an aspect of the invention, said at least one property includes, for each of a plurality of wavelength ranges, an intensity of the ambient light in the corresponding wavelength range.

According to an aspect of the invention, the compressive sensing module includes an object detection mode of operation, wherein the physical parameter is representative of an object and the at least one compressed representation is configured to allow the determination of at least one property of the object.

According to an aspect of the invention, the compressive sensing module includes a distance detection mode of operation, wherein the physical parameter is representative of a distance between the user and an object and the at least one compressed representation is configured to allow the determination of said distance.

The invention also relates to an eyewear system comprising an eyewear item according to any of the preceding claims and a processing module configured to retrieve the at least one compressed representation outputted by the eyewear item and to reconstruct the physical parameter based on said at least one compressed representation.

The invention also relates to a method of acquiring a compressed representation of a physical parameter, said method comprising:
- using a compressive sensing module included in an eyewear item worn by a user over or on at least one eye of said user, acquiring at least one compressed representation of the physical parameter adapted to allow a reconstruction of said physical parameter, said compressed representation corresponding to a convolution of measurements of said physical parameter,
- using the compressive sensing module included in said eyewear item, outputting the at least one compressed representation for retrieval by a processing module configured to reconstruct said physical parameter based on the at least one compressed representation acquired by the compressive sensing module included in the eyewear item.

According to an aspect of the invention, the method further comprises sending the at least one compressed representation of to the processing module which is distant from the eyewear, and, using the processing module, reconstructing the physical parameter based on said at least one compressed representation of the physical parameter.

Further features and advantages of the invention will be better understood upon reading the following detailed description, which is made in a non-limiting manner in light of the appended drawings, in which :
- Figure 1 illustrates an eyewear item and an eyewear system according to the invention;
- Figure 2 illustrates the compressive sensing module of the eyewear item of Figure 1; and
- Figure 3 illustrates a method according to the invention.

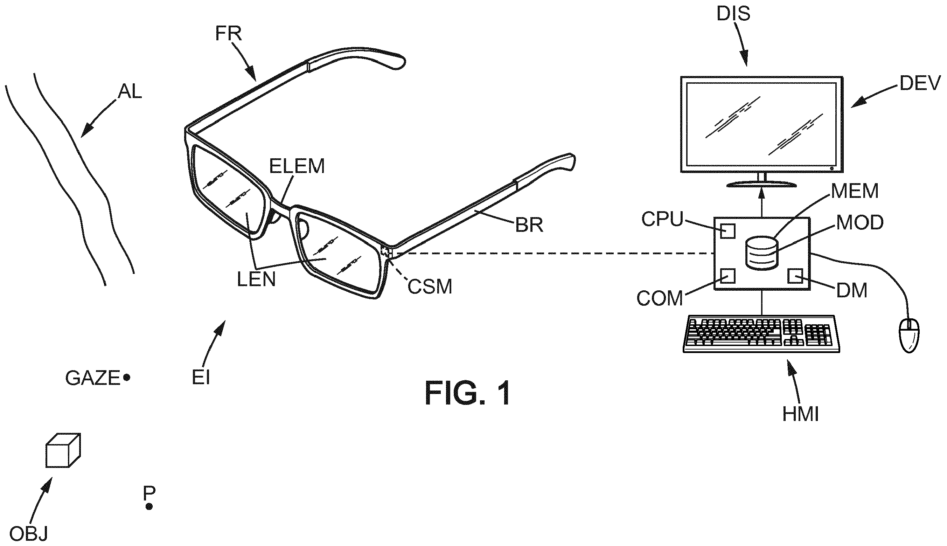

Figure 1 illustrates an eyewear system SYS according to the invention.

The eyewear system SYS, hereinafter system SYS, includes an eyewear item EI according to the invention, and a processing module MOD.

The eyewear item EI belongs to a user and is destined to be worn by the user over or on at least one of his/her eyes.

The eyewear item EI may correspond to spectacles, a monocle, a contact lens, and the like.

The eyewear item EI may have vision-corrective properties. Alternative, it does not have vision-corrective properties. Alternatively or additionally, it may be configured to protect the user's eyes from the sun.

In the example of Figure 1, the eyewear item is in the form of spectacles. The following description will be made in a non-limiting manner in reference to such a configuration.

The spectacles EI include a frame FR and one or more lens LEN received in the frame FR. For instance, it includes two lenses LEN.

The frame for instance includes side branches BR and a main frame element ELE to which the side branches are coupled. For instance, they are articulated on the main frame element ELEM so as to be able to pivot relative thereto.

The main frame element ELE comprises one or more region each destined to cooperate with one lens LEN for securing the lens to the frame. The region may be in the form of a hole having dimensions complementary to that of the associated lens LEN.

Alternatively, the region may have any known form, and may be configured for the securing of the associated lens to the frame without defining a hole in the frame. For instance, the frame is thus a rimless frame.

In the context of the invention, the eyewear item EI further includes a compressive sensing module CSM.

The compressive sensing module CSM is configured to acquire measurements of a physical parameter PP, or physical phenomenon, in the form of signals which each form a compressed representation of the parameter. The signals are configured to allow the reconstruction of the parameter PP by the processing module.

In effect, the compressive sensing module CSM relies on acquiring one or more, and typically a plurality, different convoluted measurements CM which each correspond to a given combination, for instance linear combination, of measurements MEAS of the parameter.

For instance, the parameter may be electromagnetic in nature.

In the context of the invention, preferably, the phenomenon whose reconstruction is sought is optical in nature, the compressive sensing module CSM being an optical compressive sensing module.

For instance, advantageously, the parameter, or phenomenon, corresponds to an image whose reconstruction is sought.

This image may for instance correspond to a scene the wearer is looking at, to the eyes of the wearer themselves, etc.

Alternatively, the parameter is electromagnetic but not optical. For instance, it is defined by electromagnetic waves having wavelengths in bands other than visible bands, such as radio waves, terahertz waves, etc.

Alternatively, it may be other than electromagnetic, such as acoustic.

In general, the parameter may correspond to any phenomenon adapted to be measured through a combination of simultaneous measurements.

In effect, the parameter is a sparse parameter, which is the case for many parameters such as optical ones, a predetermined number of convoluted signals allowing to reconstruct the parameter, typically through a recovery algorithm configured to determine the most likely parameter which has given rise to the convoluted measurements which were obtained.

In what follows, the description is given in a non-limiting manner for a module CSM which is optical.

All or part of the compressive sensing module CSM is for instance included in the frame FR. For instance, it is embedded in the main frame element ELE.

Alternatively or in parallel, all or part of the compressive sensing module CSM is arranged on or in one or more of the lenses LEN.

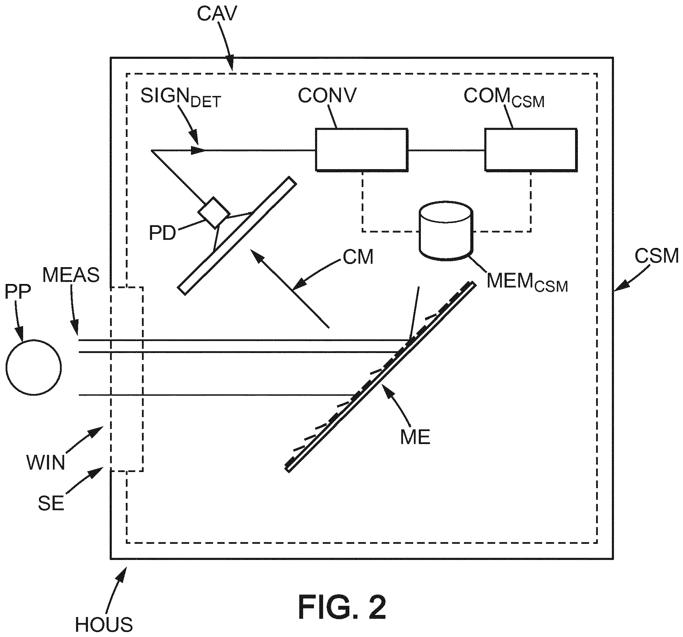

In certain embodiments, the module CSM is arranged in a housing HOUS (Figure 2) located in a cavity CAV arranged in the eyewear item. For instance, the cavity CAV is arranged in the frame.

Alternatively, the module CSM is arranged directly in the cavity CAV, and does not include any housing.

In hybrid configurations, the module CSM includes a housing within which part of its components are arranged, other of its components being arranged outside the housing. For instance, they are then in the cavity, on the frame and/or in or on one or more lens LEN.

This cavity CAV is open, for instance via a window WIN, so as to allow the physical parameter to be observed by the module CSM. In some embodiments, the cavity is open toward a direction which corresponds to the general direction the user looks at. In other embodiments, such as those in which the module CSM is used as an eyetracking device (detailed below), the cavity is open toward the eye of the user.

In reference to Figure 2, in details, the compressive sensing module CSM includes a mask element ME, a detector PD, and a digitization element CONV. In addition, it includes a communication module COM_{CSM}.

The mask element ME is configured to convolute measurements MEAS of the physical parameter PP to form convoluted measurements CM.

Each measurement forms an observation of the physical parameter PP.

For instance, for an optical parameter, each measurement corresponds to the by-product of the interaction of light and all or part of the scene which corresponds to the physical parameter PP. In a known manner, a measurement is conveyed using a support. This support depends on the nature of the physical parameter PP. For instance, for an optical parameter PP, this support takes the form of light.

The convolution which is performed by the mask element ME is a combination of the measurements MEAS. It may be a spatial convolution. Alternatively or additionally, the convolution may be temporal.

In addition, this combination may be linear or not.

The mask element ME is adapted to generate, from a given number of measurements MEAS which reach it, one convoluted measurement CM. The convoluted measurement CM is generated as one convoluted measurement among a plurality of possible convoluted measurements.

To that end, the configuration of the mask element ME is controllable to define the convoluted measurement CM obtained from a given set of measurements which will be generated from the possible convoluted measurements.

For instance, the mask element ME includes a plurality of elements which each can be controlled to selectively contribute or not to the output of the mask element ME which is generated by the latter based on the measurements.

In effect, in particular for an optical parameter, the mask element ME for instance includes a spatial light modulator which is adapted to generate an output which includes a plurality of regions. The spatial light modulator includes a plurality of selectively controllable elements each associated to one or more of the regions and adapted to modify at least one property, such as the direction of propagation, of the incident beam to form the light of the corresponding region.

For instance, the spatial light modulator includes a digital micro-mirror device, or DMD device, whose elements each include a selectively controllable mirror adapted to move between a first position in which it reflects the incident light -here the measurements- toward the detector PD, and a second position in which it reflects the incident light away from the detector PD.

The DMD device typically presents itself in the form of a matrix of micro-mirrors.

Other types of mask elements ME may be used depending of the nature of the physical parameter, for instance electromechanical microsystems, a liquid crystal matrix, etc.

For controlling the configuration of the mask element, the mask element ME includes a controller (not shown) configured to control and change its configuration over time, for instance to control the various controllable elements to define the configuration of the mask element at a given time. The rate and the sequence of the configuration changes imparted to the mask element are for instance predetermined. For instance, they are based on the operating mode of the module CSM which is currently employed, as detailed below. The sequence and its modalities may be used for reconstructing the physical parameter PP.

The detector PD is configured to receive the convoluted measurements CM generated by the mask element ME and convert each of them into a detected signal SIGN_{DET} which is representative of the convoluted measurements. In other words, the detector PD is configured for acquiring the convoluted measurements CM generated by the mask element ME in the form of signals SIGN_{DET}.

Each detected signal SIGN_{DET} is a compressed representation of the physical parameter PP.

The detector PD includes a device configured to react to the convoluted measurements CM and to generate one or more electrical analog signals representative thereof, which form the detected signal SIGN_{DET}.

The detector PD is or includes advantageously a photosensitive electronic component, such as a photodiode, a CCD device (for "Charge-Coupled device") or a CMOS device (for "complementary metal-oxide-semiconductor"). Other components may be used such as one or more solar cell or sensor, one or more photoresistor or one or more phototransistor.

In some embodiments, one or more laser, one or more laser diode or one or more light-emitting diode may be used, either in addition or in replacement of the component(s) above. This is particular advantageous in case an optical retro-injection configuration is used.

Other components, in particular for parameters which are not optical, may be used.

The digitization element CONV is configured to shape the detected signals SIGN_{DET} for further transmission to the processing module MOD.

In effect, the digitization element CONV is configured to convert the detected signals into digitized detected signals having the appropriate configuration, whereby the compressed representations of the parameter PP can be outputted by the module CSM.

The communication module COM_{CSM} is configured to communicate with the processing module MOD for retrieval by the latter of the compressed representations of the parameter PP via the digitized detected signals representative thereof.

In certain embodiments, the communication module COM_{CSM} is configured to communicate wirelessly with the processing module MOD. For instance, it may use any known technology to that end, such as Bluetooth, Near-Field communications, Wifi, Radiofrequencies, or an optical communication technology for instance based on infrareds, Li-Fi (for Light Fidelity) and the like.

Alternatively or in parallel, the communication module COM_{CSM} is configured to communicate with the processing module MOD via a wire communication. Any technology may be used to that end, the module COM_{CSM} then including a socket adapted to that end.

In addition to the elements above, optionally, the compressive sensing module also includes a shaping element SE (Figure 2) configured to shape the observation of the parameter PP by the module CSM in a predetermined manner.

For instance, the shaping element SE includes an optical element configured to modify the direction of propagation of light passing therethrough, for instance to increase the quantity of light reflected by the parameter PP and gathered by the module CSM. The optical element for instance corresponds to a lens, such as a convex or bi-convex lens. In some configuration, a mirror can be used. A spectral filter may also be used (alternatively or additionally).

In effect, the shaping element SE is in particular configured to interact with the information support - such as light for optical modules - destined to the mask element.

Optionally, the compressive sensing module CSM includes a memory MEM_{CSM} configured to store the digitized detected convoluted signals prior to their being communicated to the processing module MOD.

In reference to Figure 1, the processing module MOD is configured to process the data received from the compressive sensing module CSM to reconstruct the parameter which has been observed by the compressive sensing module CSM.

In some embodiments such as those exemplified in Figure 1, the processing module MOD is in a software form, and includes one or more programs whose execution by a processor implements one or more algorithms which are configured to reconstruct the parameter from the compressed representations of it provided by the module CSM.

Any known method and algorithm may here be employed for the needs of the reconstruction.

In these embodiments, the processing module MOD is stored in a memory MEM of a computer device DEV which also includes a processor CPU and a communication interface COM adapted to communication with the communication module COM_{CSM} of the compressive sensing module CSM.

The device DEV may further include a human-machine interface HMI which for instance includes a mouse and a keyboard, as well as a display DIS.

The processor CPU is configured to run programs contained in the memory for the operations of the device DEV, and in particular the processing module MOD for the reconstruction of the physical parameter.

The result of the reconstruction carried out by the processing module MOD is for instance stored in the memory MEM for further use by one or more piece of equipment.

In alternative embodiments, the processing module MOD may be at least in part a hardware module which includes for instance a dedicated communication interface, processor and/or memory. It may then be distinct and distant from a typical computer device such as that of Figure 1.

In some embodiments, instead of being distant from the eyewear item EI, the processing module MOD is located in or onto the eyewear item EI.

It may then include a dedicated processing unit, memory and communication interface.

In the context of the invention, the compressive sensing module CSM may present one or more operating modes each corresponding to a specific functionality or application.

Advantageously, the compressive sensing module CSM includes an eye tracking mode of operation. In this mode of operation, the parameter PP is representative at least of a position and/or direction GAZE (Figure 1) of the gaze of the user wearing the eyewear item. The compressed representations of the physical parameter PP are configured to allow reconstructing this position and/or direction.

In effect, via this mode of operation, the eyewear item EI provided with the compressive sensing module CSM operates as an eyetracking device.

In this mode of operation, the processing module MOD may proceed based on data which are representative of property of human eyes in general, and/or of that of the wearer. For instance, the geometry of the eye of the wearer is taken into account. Advantageously, other elements are taken into account such as the color of regions of the eyes of the wearer (such as the iris, the pupil and the sclera) and/or reflection variations of the eyes of the wearer.

Advantageously, the compressive sensing module CSM includes an ambient light mode of operation, wherein the parameter is representative of at least one property of an ambient light AL (schematically depicted in Figure 1) surrounding the user.

The compressed representations of the parameter acquired by the module CSM are configured to allow determining the property or properties in question.

For instance, at least one property which is destined to be reconstructed is an intensity of the ambient light AL.

Alternatively, or more precisely, the property or properties in question include, for each of a plurality of wavelength ranges, an intensity of the ambient light AL in the corresponding wavelength range.

In other words, the intensity which is sought to be obtained is associated to a given spectral range, and a plurality of ranges are considered to determine the corresponding intensities.

In such a configuration, advantageously, the compressive sensing module CSM includes a filter, such as a spatial multispectral mosaic filter, which includes a plurality of filtering components each adapted to select wavelengths in a narrow band different from that of the other filtering components. The convolution then pertains to the convolution of the bands produced by each filtering component together.

Advantageously, the compressive sensing module CSM includes an object detection mode of operation. In this mode of operation, the parameter PP is representative of an object OBJ (Figure 1). The compressed representations are configured to allow the determination of at least one property of the object.

For instance, the at least one property is selected among : a size of the object, a shape of the object, a speed of the object if the object is moving, its color, its light reflectivity, its surface configuration which for instance includes whether its surface is smooth or not.

These data may be used for displaying purposes, for instance to identify a zone of the object which provides a contrast level having a predetermined value.

Advantageously, the compressive sensing module CSM includes a distance detection mode of operation. In this operation mode, the parameter PP is representative of a distance between the user and an object (symbolized by a point P in Figure 1). The compressed representations of the parameter P are configured to allow the determination of this distance.

In a further face recognition mode of operation, the parameter PP is representative of a view of the face of a person. The compressed representations of the parameter PP are configured to allow reconstruction of the view of the face for further identification.

In one or more of the operating modes above, the further use of the results of the reconstruction of the parameter PP based on the compressed representations thereof acquired by the compressive sensing module may be carried out by a dedicated module DM (Figure 1).

This dedicated module DM may form part of an electronic piece of equipment, such as a personal computer, a smartphone, a tablet, a smartwatch, and the like. It may for instance form part of the computer device DEV. Alternatively, the dedicated module is distinct from the computer device DEV.

Alternatively, it may be carried out by the processing module MOD, which is then further configured to that end.

The further use in question may involve displaying information (for instance via a display or by projection onto a surface, such as a screen), generating and playing an audible message, etc.

Moreover, the piece of equipment involved in further using the results of the reconstruction of the parameter may vary from one mode of operation to another. For instance, the module MOD may further use the results in one or more mode of operation, while the dedicated module DM does so for the remaining mode(s) of operation.

In addition, two or more of the various modes of operation above may be implemented simultaneously in some embodiments.

Alternatively, the modes of operation are exclusive from one another.

Optionally, the switching from one mode to another is carried out automatically and/or manually, for instance, by the user of the eyewear item EI.

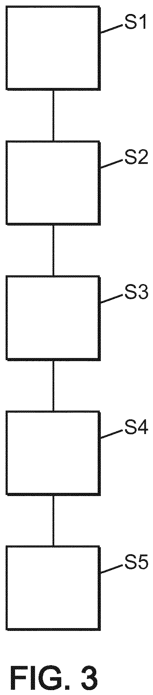

A method of acquiring a compressed representation of a physical parameter PP according to the invention will now be described in reference to the Figures, in particular Figure 3.

During a step S1, using the compressive sensing module CSM included in the eyewear item EI worn by the user over or on at least one eye of said user, at least one compressed representation of the physical parameter PP adapted to allow a reconstruction of the parameter PP is acquired.

In effect, the module CSM receives measurements MEAS of the parameter PP, and the mask element ME convolutes these measurements to form a convoluted measurement CM. This convoluted measurement is forwarded to the detector PD. The detector PD reacts to it and generates a detected signal SIGN_{DET} which is representative of the convoluted measurement CM and which forms a compressed representation of the parameter PP.

During a step S2, the compressed representation which has been acquired by the compressive sensing module CSM during step S1 in the form of the signal SIGN_{DET} is digitized by the digitization element CONV and outputted by the compressive sensing module for retrieval by the processing module MOD. The communication module COM_{CSM} is then used to that end by transmitting the digitized detected signal(s).

Steps S1 and S2 are repeated a predetermined number of times. Each time, the configuration of the mask element EM is changed, whereby each compressed representation of the parameter is different from another one.

The number of acquired convoluted measurements is for instance chosen as a function of the quality of the reconstruction which is desired. This number may be defined based on a calibration of the system, or via a simulation of the system.

Each compressed representation is outputted by the module CSM directly once acquired, or is temporarily stored in the memory MEM_{CSM} until the representations stored therein are sent. For instance, this transmission of the compressed representations stored in the memory MEM_{CSM} is carried out based on one or more predetermined criterion, such as a given number of compressed representations having been acquired, a predetermined duration having elapsed since the last transmission, or the reception of a request by the compressive sensing module CSM.

During a step S3, the compressed representations of the physical parameter PP are received by the processing module MOD.

In effect, for instance, they are received directly by it if is a separate module. Alternatively, they are received by the computer device DEV via the communication interface COM when the module MOD is part thereof. They are then fed to the processing module, for instance after having been temporarily stored in the memory MEM of the computer device DEV.

During a step S4, the processing module MOD processes the compressed representations received during the previous and reconstructs the parameter PP based thereon.

As indicated above, this may be done by any known process, which for instance includes one or more algorithm.

During a step S5, the reconstructed parameter is used further, for instance in the context of one or more of the applications described above.

For instance, a facial recognition or object recognition process is carried out, the position and/or direction of the gaze of the user is determined, etc.

The invention presents several advantages. In particular, it provides an eyewear item with increased capabilities in a very efficient manner, and therefore allows the latter to benefit from functionalities that are usually calculation-heavy without needing an actual high-performance processing module located on the eyewear item EI.

The overall cost of the eyewear item is then relatively low given its functionalities.

Moreover, the compressive sensing module CSM is of small size, and is therefore easy to integrate to eyewear items without heavily altering their design.

In configurations in which the eyewear item EI is a contact lens, the module CSM is for instance located on the contact lens, or is embedded in its material.

In the description above, the mask element ME has been described as receiving measurements to generate a convoluted, i.e. combined, measurement.

However, in some embodiments, the mask element ME may be configured to generate a convoluted measurement by emitting light toward an object, such as one or two eyes of the wearer. This is particularly advantageous in case the module CSM presents an eyetracking mode.

The mask element ME then includes a plurality of elements each adapted to generate one measurement MEAS in the sense of the invention.

For instance, the elements each take the form of a light source which is at a distance from the other light sources. Predetermined elements may then be selectively activated at a given time, for instance using a sequence wherein different sets of elements are lit each time. Each time a group is lit, the object is lit by the corresponding combination of the elements, which forms a convoluted measurement CM. This convoluted measurement CM reaches the detector PD, whose position may be adjusted if need be, which then transforms the convoluted measurement CM into the signal SIGN_{DET} as described above.

The elements may also take the form of holographic masks which are selectively illuminated by a light source. The holographic masks may be computer-generated, or recorded, for instance using a Fourier holographic principle.

In these configurations, the mask element ME is also configured to convolute the measurements. However, this is done by emitting light (information support in general) toward the physical phenomenon, rather than interacting with the light received therefrom.

## Claims

1. An eyewear item (EI) adapted to be worn by a user over or on at least one eye of said user, the eyewear item including a compressive sensing module (CSM), said compressive sensing module being configured for:
- acquiring at least one compressed representation of a physical parameter (PP) adapted to allow a reconstruction of said physical parameter (PP), said compressed representation corresponding to a convolution of measurements of said physical parameter,
- outputting the at least one compressed representation of the physical parameter for retrieval by a processing module (MOD) configured to reconstruct said physical parameter based on the at least one compressed representation acquired by the compressive sensing module.

2. The eyewear item according to claim 1, further including said processing module.

3. The eyewear item according to claim 1 or 2, wherein the compressive sensing module includes a communication module (COM_{CSM}) configured for sending the at least one compressed representation to the processing module.

4. The eyewear item according to any one of the preceding claims, wherein the compressive sensing module includes:
- a mask element (ME) configured to convolute measurements (MEAS) of the physical parameter (PP) to form a convoluted measurement (CM),
- a detector (PD) configured to receive and transform the convoluted measurement into a detected signal (SIGN_{DET}) forming one of the at least one compressed representation of the physical parameter (PP),
- a digitization element (CONV) configured to digitize the detected signal for outputting the corresponding compressed representation of the physical parameter..

5. The eyewear item according to claim 4, wherein the mask element has a controllable configuration, whereby the mask element is adapted to generate each convoluted measurement as one convoluted measurement among a plurality of possible convoluted measurements.

6. The eyewear item according to any one of the preceding claims, wherein the compressive sensing module is an optical compressive sensing module, the physical parameter being optical in nature.

7. The eyewear item according to any one of the preceding claims, wherein the compressive sensing module comprises an eye tracking mode of operation, wherein the physical parameter (PP) is representative at least of a position and/or direction of a gaze (GAZE) of the user and the at least one compressed representation is configured to allow reconstructing said position and/or direction of the gaze of the user.

8. The eyewear item according to any one of the preceding claims, wherein the compressive sensing module includes an ambient light mode of operation, wherein the physical parameter is representative of at least one property of an ambient light (AL) surrounding the user and the at least one compressed representation is configured to allow determining said property.

9. The eyewear item according to claim 8, wherein said at least one property includes an intensity of said ambient light.

10. The eyewear item according to claim 8 or 9, wherein said at least one property includes, for each of a plurality of wavelength ranges, an intensity of the ambient light in the corresponding wavelength range.

11. The eyewear item according to any one of the preceding claims, wherein the compressive sensing module includes an object detection mode of operation, wherein the physical parameter is representative of an object and the at least one compressed representation is configured to allow the determination of at least one property of the object.

12. The eyewear item according to any one of the preceding claims, wherein the compressive sensing module includes a distance detection mode of operation, wherein the physical parameter is representative of a distance between the user and an object and the at least one compressed representation is configured to allow the determination of said distance.

13. An eyewear system comprising an eyewear item according to any of the preceding claims and a processing module configured to retrieve the at least one compressed representation outputted by the eyewear item and to reconstruct the physical parameter based on said at least one compressed representation.

14. A method of acquiring a compressed representation of a physical parameter (PP), said method comprising:
- using a compressive sensing module (CSM) included in an eyewear item (EI) worn by a user over or on at least one eye of said user, acquiring at least one compressed representation of the physical parameter (PP) adapted to allow a reconstruction of said physical parameter (PP), said compressed representation corresponding to a convolution of measurements of said physical parameter,
- using the compressive sensing module (CSM) included in said eyewear item, outputting the at least one compressed representation for retrieval by a processing module configured to reconstruct said physical parameter (PP) based on the at least one compressed representation acquired by the compressive sensing module included in the eyewear item.

15. The method of claim 14, further comprising sending the at least one compressed representation of to the processing module which is distant from the eyewear, and, using the processing module, reconstructing the physical parameter (PP) based on said at least one compressed representation of the physical parameter (PP).
